Europäisches Patentamt

European Patent Office

Office européen des brevets

(19)

(11) EP 0 358 975 B1

(12) **EUROPÄISCHE PATENTSCHRIFT**

(45) Veröffentlichungstag und Bekanntmachung des Hinweises auf die Patenterteilung:
04.11.1998 Patentblatt 1998/45

(51) Int. Cl.$^6$: **C01B 21/068**

(21) Anmeldenummer: 89115212.6

(22) Anmeldetag: 18.08.1989

(54) **Siliciumnitridpulver mit geringem Sauerstoffgehalt**

Silicon nitride powder having a low oxygen content

Poudre de nitrure de silicium à faible teneur en oxygène

(84) Benannte Vertragsstaaten:
DE FR GB IT SE

(30) Priorität: 31.08.1988 DE 3829503

(43) Veröffentlichungstag der Anmeldung:
21.03.1990 Patentblatt 1990/12

(73) Patentinhaber: BAYER AG
51368 Leverkusen (DE)

(72) Erfinder:
• Pitzer, Ulrike, Dr.
D-4150 Krefeld (DE)
• Laubach, Benno, Dr.
D-4150 Krefeld (DE)
• Franz, Gerhard, Dr.
D-4150 Krefeld (DE)

(56) Entgegenhaltungen:
EP-A- 0 219 764          EP-A- 0 251 322
GB-A- 2 020 264          US-A- 4 405 589

• CERAMIC MATERIALS AND COMPONENTS FOR ENGINES, PROCEEDINGS OF THE 2ND INTERNATIONAL SYMPOSIUM, 1986, Seiten 117-124, Deutsche Keramische Gesellschaft; G. FRANZ et al.: "Synthesis of fine grained Si3N4-powders by thermal decomposition of silicon diimide"

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft $Si_3N_4$-Pulver mit einem geringen Sauerstoffgehalt sowie Verfahren zur Herstellung dieser Pulver.

Siliciumnitridpulver sind alle durch einen bestimmten Anteil an Sauerstoff verunreinigt. Der Sauerstoffgehalt beträgt in kommerziellen Pulvern zwischen ca. 0,8 Gew.-% und 2,5 Gew.-% (G.Ziegler, J.Heinrich, G.Wötting, J.Mater. Sci. 22 (1987), 3041-3086).

Obwohl der Sauerstoff eigentlich als eine Verunreinigung des Pulvers angesehen wird, wird er in begrenztem Umfang für drucklose oder Gasdrucksinterungen sogar angestrebt, um die Sinteraktivität des Siliciumnitridpulvers zu verbesssern. Zur Sinterung werden dem Pulver Sinteradditive zugesetzt, die zusammen mit dem im Pulver vorliegenden Sauerstoff bei der Sintertemperatur flüssige Phasen bilden und so eine Verdichtung des Materials ermöglichen. Insgesamt wird für die Gasdrucksinterung ein Sauerstoffgehalt von ca 1,5 Gew.-% als optimal betrachtet.

Auf die mechanischen Eigenschaften, insbesondere bei hohen Temperaturen, hat der Sauerstoff allerdings einen negativen Einfluß, da er die Glastemperatur der Sekundärphasen erniedrigt und damit die Festigkeit und Kriechbeständigkeit bei hohen Temperaturen verschlechtert.

Zum heißisostatischen Pressen kann der Gehalt an Sinteradditiven und damit der Sauerstoffgehalt jedoch auch niedriger liegen. Formteile, die aus $Si_3N_4$-Pulvern mit einem als besonders niedrig beschriebenen Sauerstoffgehalt von 0,8 Gew.-% durch heißisostatisches Pressen hergestellt wurden, weisen besonders gute mechanische Eigenschaften auf (R. R. Wills, M. C. Brockway, L. G. McCoy, D. E. Niesz, Ceramic Eng. Sci. Proc. 1(1980), S. 34 - 39). Selbst wenn unter inerten oder reduzierenden Bedingungen gearbeitet wird, wie in der US-A 4 405 589 beschrieben, konnten jedoch Pulver mit einem niedrigeren Sauerstoffgehalt als 0,8 Gew.-% bislang nicht erhalten werden.

Aufgabe dieser Erfindung ist es somit, $Si_3N_4$-Pulver zur Verfügung zu stellen, die die beschriebenen Nachteile des Standes der Technik nicht aufweisen.

Überraschenderweise wurde nun $Si_3N_4$-Pulver mit einem Gesamtsauerstoffgehalt von kleiner oder gleich 0,4 Gew.-% aufgefunden, die diese Forderungen erfüllen. Diese $Si_3N_4$-Pulver sind Gegenstand dieser Erfindung. Bevorzugt weisen die erfindungsgemäßen $Si_3N_4$-Pulver einen Gesamtsauerstoffgehalt von kleiner als 0,25 Gew.-% auf.

Gegenstand dieser Erfindung ist auch ein Verfahren, mit dem es möglich ist, die erfindungsgemäßen $Si_3N_4$-Pulver herzustellen. Als Ausgangsmaterial sind amorphe $Si_3N_4$-Vorprodukte geeignet, wie sie durch Reaktion von $SiCl_4$ mit Ammoniak herstellbar sind (DE-A 35 36 933; DE-C 29 15 023; G.Franz, L.Schönfelder, U.Wickel, Ceramic Materials and Components for Engines, Proc. 2nd Int. Symp., Deutsche Keramische Ges. (1986)). Diese Reaktion kann entweder bei Raumtemperatur oder tieferen Temperaturen < 0°C in einer Flüssigphase durchgeführt werden oder bei Temperaturen zwischen ca. 70°C und 1600°C in einer Gasphasenreaktion. Je nach Herstellungsverfahren variiert die spezifische Oberfläche (BET) des $Si_3N_4$-Vorproduktes zwischen ca. 1000 $m^2/g$ (Flüssigphasenverfahren) und ca. 100 $m^2/g$ (Gasphasenverfahren bei T > 1000°C).

Diese amorphen $Si_3N_4$-Vorprodukte sind extrem feuchtigkeitsempfindlich, und zwar um so stärker, je höher die spezifische Oberfläche der Pulver ist. Die amorphen Vorprodukte werden in einem weiteren Verfahrensschritt durch Temperung bei Temperaturen von größer als 1300°C in kristallines $Si_3N_4$ überführt.

Mehrfach wird beschrieben, daß bei der Herstellung von $Si_3N_4$-Pulvern unter Luft- und Feuchtigkeitsausschluß gearbeitet werden muß (US-A 4 405 589, US-A 4 122 155). Diese Pulver zeigen jedoch nicht die geforderte Sauerstofffreiheit.

Überraschenderweise wurde nun aber gefunden, daß zur Herstellung der erfindungsgemäßen Pulver Luft- und Feuchtigkeitsausschluß nach üblichen technischen Maßstäben ausreichen. Dies gelingt durch ein Verfahren zur Herstellung der erfindungsgemäßen $Si_3N_4$-Pulver, bei dem durch Reaktion einer Si-haltigen Verbindung mit einer N-haltigen Verbindung ein amorphes $Si_3N_4$-Vorprodukt hergestellt und dann kristallisiert wird, wobei das Produkt P aus spezifischer Oberfläche des amorphen Vorproduktes (BET in $m^2/g$), Feuchtigkeitsgehalt

$$C_{H_2O}$$

(in Vol ppm) der Atmosphäre bei der Handhabung und der Zeit t (in h), die für die Handhabung des amorphen Vorproduktes benötigt wird, kleiner als das Grenzwertprodukt $P_G$ von 1000 gehalten wird gemäß der Formel

$$P = BET (m^2/g) \times C_{H_2O} (Vol\ ppm) \times t (h) < P_G.$$

Wird dieser Grenzwert nicht eingehalten, steigt der Gesamtsauerstoffgehalt auf einen Wert von größer als 0,4 % an.

Das Produkt P läßt sich am besten dadurch unter dem Wert von 1000 halten, indem man von einem amorphen Vorprodukt ausgeht, das eine BET von nicht mehr als 250 $m^2$/g hat. Da das Vorprodukt zu einem sehr feinteiligen Endprodukt führen sollte, ist allerdings mindestens eine BET von 100 $m^2$/g wünschenswert. Ein solches Pulver läßt sich bevorzugt durch Gasphasenreaktion zwischen $SiCl_4$ und $NH_3$ bei Temperaturen über 1000°C herstellen. Stickstoff läßt sich unter kontrollierten Bedingungen durch Luftzerlegung im technischen Maßstab so rein herstellen, daß der Feuchtigkeitsgehalt nicht mehr als 5 ppm beträgt. Durch schnelles Arbeiten in der kritischen Phase zwischen Herstellung des wegen seiner hohen BET sehr reaktiven, amorphen Vorproduktes und der Kristallisation kann man die Handhabungszeit auf t < 1 h beschränken. Da schon bei Beginn der Kristallisation die BET und damit die Reaktivität schnell abnimmt, ist die Kristallisationszeit in bezug auf eine mögliche Erhöhung des Sauerstoffgehaltes vernachlässigbar. Geht man von amorphen Vorprodukten mit einer BET von ca. 1000 $m^2$/g aus, muß der technische Stickstoff auf deutlich kleiner als 1 ppm Feuchtigkeitsgehalt gereinigt und die Handhabungszeit weiter gesenkt werden, damit das Grenzwertprodukt von $P_G$ = 1000 unterschritten wird. Diese Maßnahmen sind nur mit einem erheblichen technischen Aufwand zu realisieren.

In einer besonderen Ausführungsform, bei der der Feuchtigkeitsgehalt und die Handhabungszeit weiter erniedrigt wird, lassen sich bei amorphen Vorprodukten mit einer BET von etwa 250 $m^2$/g Grenzwertprodukte von $P_G'$ = 500 unterschreiten. Dadurch kann der Sauerstoffgehalt im kristallinen $Si_3N_4$-Pulver auf kleiner als 0,25 Gew.-% verringert werden.

Dabei ist im technischen Maßstab noch eine Erniedrigung des Wassergehaltes in Stickstoff auf ca. 1 Vol ppm ohne größeren Aufwand machbar. Die Handhabungszeit kann durch Automatisierung im günstigsten Fall auf ca. 5 Min. erniedrigt werden

Die spezifische Oberfläche BET kann nach DIN 66131 (Ein-Punkt-Methode, $N_2$ Adsorption) bestimmt werden. Die Bestimmung des Sauerstoffgehaltes erfolgt nach der Heißgasextraktionsmethode. Dabei wird eine $Si_3N_4$-Probe in einen Graphittiegel eingewogen und in einem Heliumstrom auf über 1800°C erhitzt. Der in der Probe enthaltene Sauerstoff wird dabei zu CO umgesetzt, das mit Hilfe einer IR-Meßzelle quantitativ bestimmt wird.

Die erfindungsgemäßen $Si_3N_4$-Pulver und Herstellungsverfahren sollen im folgenden anhand von Beispielen näher erläutert werden, ohne daß hierin eine Einschränkung zu sehen ist.

Beispiel 1

Durch Umsetzung von $SiCl_4$ mit $NH_3$ in der Gasphase bei einer Reaktionstemperatur von 1400°C und anschließender Entchlorierung wird ein amorphes $Si_3N_4$-Vorprodukt hergestellt. Dieses Vorprodukt hat eine BET von 200 $m^2$/g. Innerhalb einer Zeit von 45 Min. (0,75 h) werden 150 g dieses amorphen Vorproduktes in ein Kristallisationsschiffchen gefüllt und anschließend 60 Min. bei einer Temperatur von 1450°C kristallisiert. Der Feuchtigkeitsgehalt der Atmosphäre bei der Handhabung liegt niedriger als 5 ppm. Daraus errechnet sich das Produkt P zu:

$$P = 200 \ (m^2/g) \times 0{,}75 \ (h) \times 5 \ (ppm) = 750 \ (< 1000).$$

Von dem kristallisierten Pulver wird der Sauerstoffgehalt über Heißextraktion im inerten Trägergasstrom bestimmt. Er beträgt 0,30 Gew.-%.

Beispiel 2

Wie in Beispiel 1 wird ein amorphes $Si_3N_4$-Vorprodukt mit einer BET von 200 $m^2$/g hergestellt. Der Feuchtigkeitsgehalt in der Atmosphäre bei der Handhabung liegt wieder unter 5 ppm. Durch Verbesserung der Versuchsanordnung wird die Zeit, die zur Abfüllung von 150 g Vorprodukt in ein Kristallisationsschiffchen benötigt wird, auf 15 Min. (0,25 h) verkürzte. Das amorphe Vorprodukt wird 60 Min. bei einer Temperatur von 1450°C kristallisiert. Das Produkt P errechnet sich zu:

$$P = 200 \ (m^2/g) \times 0{,}25 \ (h) \times 5 \ (ppm) = 250 \ (< 500).$$

Von dem kristallisierten Pulver wird der Sauerstoffgehalt durch Heißextraktion im inerten Trägergasstrom bestimmt. Er beträgt 0,22 Gew.%.

**Patentansprüche**

1. $Si_3N_4$-Pulver, dadurch gekennzeichnet, daß der Gesamtsauerstoffgehalt des Pulvers kleiner oder gleich 0,4 Gew.-% ist.

2. $Si_3N_4$-Pulver, dadurch gekennzeichnet, daß der Gesamtsauerstoffgehalt des Pulvers kleiner oder gleich 0,25 Gew.-% ist.

3. Verfahren zur Herstellung von $Si_3N_4$-Pulver gemäß Anspruch 1, bei dem durch Reaktion einer Si-haltigen Verbindung mit einer N-haltigen Verbindung ein amorphes $Si_3N_4$-Vorprodukt hergestellt und dann kristallisiert wird, dadurch gekennzeichnet, daß das Produkt P aus spezifischer Oberfläche des amorphen Vorproduktes (BET in $m^2$/g), Feuchtigkeitsgehalt

$$C_{H_2O}$$

(in Vol ppm) der Atmosphäre bei der Handhabung und der Zeit t (in h), die für die Handhabung des amorphen Vorproduktes benötigt wird, kleiner als das Grenzwertprodukt $P_G$ von 1000 gehalten wird gemäß der Formel

$$P = BET\ (m^2/g)\ x\ C_{H_2O}\ (Vol\ ppm)\ x\ t\ (h) < P_G.$$

4. Verfahren zur Herstellung von $Si_3N_4$-Pulver gemäß einem der Ansprüche 1 oder 2, dadurch gekennzeichnet, daß das Produkt P aus spezifischer Oberfläche des amorphen Vorproduktes (BET in $m^2$/g), dem Feuchtigkeitsgehalt

$$C_{H_2O}$$

(in Vol ppm) der Atmosphäre bei der Handhabung und der Zeit t (in h), die für die Handhabung des amorphen Vorproduktes benötigt wird, kleiner das Grenzwertprodukt $P_G'$ von 500 gehalten wird gemäß der Formel

$$P = BET\ (m^2/g)\ x\ C_{H_2O}\ (Vol\ ppm)\ x\ t\ (h) < P_G'.$$

## Claims

1. $Si_3N_4$ powder, characterised in that the total oxygen content of the powder is less than or equal to 0.4 wt.%.

2. $Si_3N_4$ powder, characterised in that the total oxygen content of the powder is less than or equal to 0.25 wt.%.

3. Process for the production of $Si_3N_4$ powder according to claim 1, in which an amorphous $Si_3N_4$ intermediate is produced by reaction of a compound containing Si with a compound containing N and is then crystallised, characterised in that the product P calculated from the specific surface area of the amorphous intermediate (BET in $m^2$/g), the moisture content (in vol. ppm) of the atmosphere during handling and the time t (in h) which is required for handling of the amorphous intermediate is maintained at less than the limit value $P_G$ of 1000 in accordance with the formula

$$P = BET\ (m^2/g) \times C_{H_2O}\ (vol.\ ppm) \times t\ (h) < P_G.$$

4. Process for the production of $Si_3N_4$ powder according to one of claims 1 or 2, characterised in that the product P calculated from the specific surface area of the amorphous intermediate (BET in $m^2$/g), the moisture content (in vol. ppm) of the atmosphere during handling and the time t (in h) which is required for handling of the amorphous intermediate is maintained at less than the limit value $P_G'$ of 500 in accordance with the formula

$$P = BET\ (m^2/g) \times C_{H_2O}\ (vol.\ ppm) \times t\ (h) < P_G'.$$

## Revendications

1. Poudre de $Si_3N_4$, caractérisée en ce que la teneur totale en oxygène de la poudre est inférieure ou égale à 0,4 % en masse.

2. Poudre de $Si_3N_4$, caractérisée eu ce que la teneur totale en oxygène de la poudre est inférieure ou égale à 0,25 % en masse.

3. Procédé de préparation d'une poudre de $Si_3N_4$ selon la revendication 1, dans lequel on prépare un intermédiaire $Si_3N_4$ amorphe par réaction d'un composé contenant du Si avec un composé azoté, puis on le cristallise, caractérisé en ce que l'on maintient le produit P de la surface spécifique de l'intermédiaire amorphe (BET en m$^2$/g), de la teneur en humidité

$$C_{H_2O}$$

(en ppm en volume) de l'atmosphère au moment de la manipulation, et du temps t (en heures) nécessaire pour la manipulation de l'intermédiaire amorphe, à une valeur inférieure au produit limite P$_G$ de 1000, selon la formule:

$$P = BET\ (m^2/g) \times C_{H_2O}\ (ppm\ en\ vol) \times t\ (h) < P_G.$$

4. Procédé de préparation d'une poudre de Si$_3$N$_4$ selon l'une des revendications 1 ou 2, caractérisé en ce que l'on maintient le produit P de la surface spécifique de l'intermédiaire amorphe (BET en m$^2$/g), de la teneur en humidité

$$C_{H_2O}$$

(en ppm en volume) de l'atmosphère au moment de la manipulation, et du temps t (en heures) nécessaire pour la manipulation de l'intermédiaire amorphe, à une valeur inférieure au produit limite P$_G$' de 500, selon la formule:

$$P = BET\ (m^2/g) \times C_{H_2O}\ (ppm\ en\ vol) \times t\ (h) < P_G'.$$